Europäisches Patentamt

European Patent Office

Office européen des brevets

(11) Veröffentlichungsnummer: **0 451 698 A1**

# (12) EUROPÄISCHE PATENTANMELDUNG

(21) Anmeldenummer: 91105325.4

(22) Anmeldetag: 04.04.91

(51) Int. Cl.⁵: **B65H 18/04**

(30) Priorität: 12.04.90 DE 4011915

(43) Veröffentlichungstag der Anmeldung:
16.10.91 Patentblatt 91/42

(84) Benannte Vertragsstaaten:
AT CH DE FR GB LI NL

(71) Anmelder: BASF Aktiengesellschaft
Carl-Bosch-Strasse 38
W-6700 Ludwigshafen(DE)

(72) Erfinder: Classen, Egbert
Wuerzmuehlstrasse 9
W-6730 Neustadt(DE)
Erfinder: Huether, Ralf
Bleichstrasse 20
W-6717 Hessheim(DE)

(54) **Klapplager zum Kuppeln von Expansionswickeldornen.**

(57) Zum Kuppeln von Expansionswickeldornen ist in einer Welle (1) eines Klapplagers eine Ausnehmung (12) für den mit einem stirnseitigen Zapfen (13) formschlüssig einlegbaren Wickeldorn (14) vorgesehen. Weiters enthält das Klapplager ein Handrad (2), das um eine senkrecht zur Welle (1) verlaufende Achse (15) aus dem Bereich des Wickeldorns herausschwenkbar und in Schließstellung verriegelbar ist. In der Welle (1) ist ein mit einer Kolbenstange (5) verbundener Kolben (4) geführt und gegen die Innenwand der Welle abgedichtet. Der Kolben und die Kolbenstange besitzen jeweils eine axiale Bohrung (10, 11) und sind zwischen einer ersten, den Wickeldorn (14) freigebenden Stellung und einer zweiten Stellung, in der die Kolbenstange (5) mit dem Wickeldorn in Verbindung steht, hin- und herbewegbar.

EP 0 451 698 A1

Die Erfindung betrifft ein Klapplager nach dem Oberbegriff des Anspruchs 1.

Ein Klapplager dieser Art ist aus der EP-A-0 280 049 bekannt. Es besteht im wesentlichen aus einer Welle mit einer Ausnehmung für einen mit einem stirnseitigen Zapfen formschlüssig einlegbaren Wickeldorn oder -Stab zum Auf- oder Abwickeln von Werkstoffbahnen und dergleichen und einem mitdrehenden Handrad. Das Handrad ist um eine quer zur Welle verlaufenden Achse aus dem Bereich des Wickeldorns oder -stabes herausschwenkbar und in Schließstellung mit Hilfe eines Kniehebels verriegelbar. Zum Aufnehmen sogenannter Expansionswickeldornen, die zum Spannen der Warenbahnhülsen über Spannleisten u.ä. verfügen, wobei durch Druckbeaufschlagung eines in der Regel im Innern der Wickeldorne befindlichen Schlauches dieser gegen die Warenbahnhülsen bzw. Spannleisten gepreßt wird, sind solche Klapplager indes nur bedingt geeignet.

Weiterhin erlauben die herkömmlichen Systeme der in Klapplagern eingesetzten Expansionswickeldorne nicht eine Druckbeaufschlagung während des Betriebs der Wickelanlage, wenn beispielsweise die Warenbahnhülsen auf dem Dorn infolge gestiegener Zugkräfte auf die Warenbahn oder infolge Leckageverlusten der druckbeaufschlagte Teil des Dorns Schlupf erfährt. Zum Justieren der Warenbahnhüllsen, d.h. zum Verschieben der Hülsen ist ein kurzzeitiges Entlüften der Dorne erforderlich, was ebenfalls nur bei stillstehender Wickelanlage möglich ist. Darüber hinaus kann das Spannen der Warenbahnhülsen, d.h. das Einleiten von Druckmitteln in den Dorn nur in aufwendiger Handarbeit erfolgen. Bei pneumatisch beaufschlagten Friktionswickelwellen gestatten herkömmliche Systeme keine Veränderung der Friktion während des Laufes, so daß eine Einstellung der Zugspannungscharakteristik nicht möglich ist.

Mit der Erfindung soll ein Klapplager zum Kuppeln von Expansionswickeldornen geschaffen werden, welches ein Spannen des Wickeldorns auch während des Betriebs der Wickelanlage ohne großen Bedienungsaufwand erlaubt und in die Anlagenautomatisierung einbezogen werden kann.

Zur Lösung dieser Aufgabe werden die Maßnahmen nach dem Kennzeichen des Anspruchs 1 vorgeschlagen.

Bei dem erfindungsgemäßen Klapplager erfolgt die Zufuhr eines Druckmittels durch die Klapplagerwelle. Hierzu ist in der Welle ein mit einer Kolbenstange verbundener Kolben geführt und gegen die Innenwand der Welle abgedichtet. Der Kolben und die Kolbenstange besitzen jeweils eine axiale Bohrung und sind durch das Druckmittel zwischen einer ersten, den Wickeldorn freigebenden Stellung und einer zweiten Stellung, in der die Kolbenstange mit dem Wickeldorn in Verbindung steht, hin- und herbewegbar.

Als Druckmittel kommen sowohl Flüssigkeiten als auch Gase, aus wirtschaftlichen Gründen insbesondere Luft in Betracht. Die Einleitung des Druckmittels in die Klapplagerwelle erfolgt mit Hilfe einer handelsüblichen Drehdurchführung.

Das neue Klapplager zeichnet sich durch eine einfache Konstruktion, die auch in vorhandene Systeme nachgerüstet werden kann, aus und ist deshalb außerordentlich unempfindlich gegen Störungen. Besonders hervorzuheben sind die geringen Abmessungen sowie das problemlose Auswechseln der Wickeldorne. Es kann sowohl an der Antriebsseite als auch an der nicht-angetriebenen Seite der Wickelanlage eingesetzt werden.

In vorteilhafter Weise kann das Klapplager so ausgebildet sein, wie in den Ansprüchen 2 bis 6 angegeben. Insbesondere wenn die Ausbildung so erfolgt wie im Anspruch 3 angegeben, ist zum Anschluß der Kolbenstange an den Wickeldorn ein allmählicher Kraftanstieg gewährleistet, und es lassen sich Lastspitzen, die zu einer mechanischen Beschädigung der Kolbenstange und des Wickeldorns führen können, vermeiden. Nach dem Spannvorgang bzw. nach Entlüftung der Klapplagerwelle wird der Kolben durch die Schraubenfeder wieder in seine erste Stellung (Ruhestellung) zurückbewegt. Dabei wird die auf den Kolben wirkende Kraft nicht stoßartig freigestzt, so daß das Kuppeln bzw. Entkuppeln des Wickeldorns alles in allem sehr schonend durchführbar ist. Die Kolbenstange läßt sich durch einfaches Lösen der Stützschraube ohne weitere Demontage austauschen.

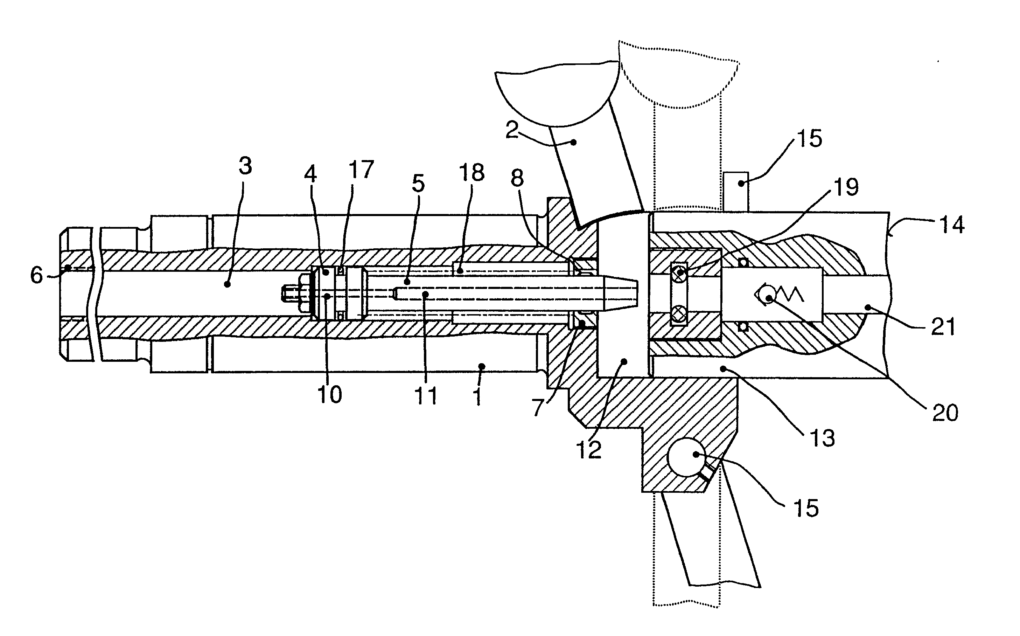

Eine beispielhafte Ausführungsform des erfindungsgemäßen Klapplagers ist in der Zeichnung schematisch dargestellt und im folgenden näher erläutert.

Im wesentlichen besteht das Klapplager aus einer Welle (1), die endseitig in einer Wickelanlage gelagert ist, und einem mit der Welle mitdrehenden Handrad (2).

In der Welle (1) ist eine mehrfach abgesetzte Bohrung (3) ausgebildet, in der ein mit einer Kolbenstange (5) verbundener Kolben (4) hin- und herbewegbar ist. Die Bohrung enthält auf der einen Seite eine Einrichtung (6) zum Anschluß eines Drehverteilers oder einer Drehdurchführung (in der Zeichnung nicht dargestellt) und auf der anderen Seite eine Stützschraube (7) zum Führen des freien Endes der Kolbenstange. Mit (8) ist eine Entlüftungsnut in der Stützschraube bezeichnet.

Der Kolben und die von einer Schraubenfeder (9) umgebene Kolbenstange weisen jeweils eine axiale Bohrung (10) bzw. (11) auf, wobei die Bohrung (11) zwecks Erzielung eines Drosseleffektes verjüngt ist. Hierdurch wird ein für die Kolbenbewegung ausreichender Druckaufbau gewährleistet. Wellenendseitig ist eine Ausnehmung (12) für den mit einem Zapfen (13) formschlüssig einlegbaren Expansionswickeldorn (14) vorgesehen. Unterhalb der Ausnehmung verläuft eine zumindest annähernd senkrecht zur Welle (1) ausgerichtete Achse (15), um die das Handrad (2) aus dem Bereich des Wickeldorns herausschwenkbar bzw. in die Schließstellung schwenkbar ist. In der Schließstellung liegt das Handrad an dem Anschlag (16) an.

Zum Spannen des Wickeldorns (14) wird Druckmittel bei (6) in die zentrale Bohrung (3) der Welle (1) eingeführt. Vor dem mit einem Dichtring (17) versehenen Kolben (4) baut sich ein Druck auf, durch den der Kolben und die mit ihm verbundene Kolbenstange (5) aus der in der Zeichnung gezeigten ersten Stellung, in der die Kolbenstange den Wickeldorn freigibt, in die zweite Stellung, in der die Kolbenstange mit dem Wickeldcrn (14) in Verbindung steht, bewegt wird. Die Kolbenbewegung erfolgt gegen die Kraft einer die Kolbenstange umgebenden und sich zwischen Kolben und der Stützschrauben (7), in der die Kolbenstange geführt ist, abstützenden Schraubenfeder (18). Dabei wird das konisch verjüngte freie Ende der Kolbenstange in eine einen Dichtring (19) sowie ein Rückschlagventil (20) enthaltende axiale Bohrung (21) des Wickeldorns (14) eingeführt. Gleichzeitig strömt das Druckmittel durch die Bohrungen (10, 11) in dem Kolben bzw. der Kolbenstange in den Wickeldorn und betätigt hierbei die dort befindlichen Spannleisten. Nach dem Spannvorgang und der Entlüftung der Bohrungen wird der Kolben durch die Schraubenfeder aus seiner zweiten Stellung wieder in die erste Stellung zurückbewegt.

Der Dichtring (19) in dem Wickeldorn (14) ist radial verschiebbar, so daß Fluchtungsfehler zwischen der Kolbenstange (5) und dem Wickeldorn ausgeglichen werden können.

**Patentansprüche**

1. Klapplager zum Kuppeln von Expansionswikkeldornen mit einer eine Ausnehmung (12) für den mit einem stirnseitigen Zapfen (13) formschlüssig einlegbaren Wickeldorn (14) aufweisenden Welle (1) und einem mitdrehenden Handrad (2), das um eine senkrecht zur Welle verlaufenden Achse (15) aus dem Bereich des Wickeldorns herausschwenkbar und in Schließstellung verriegelbar ist, dadurch gekennzeichnet, daß in der Welle (1) ein mit einer Kolbenstange (5) verbundener Kolben (4) geführt und gegen die Innenwand der Welle abgedichtet ist, und daß der Kolben und die Kolbenstange jeweils eine axiale Bohrung (10, 11) aufweisen und zwischen einer ersten, den Wickeldorn (14) freigebenden Stellung und einer zweiten Stellung, in der die Kolbenstange mit dem Wickeldorn in Verbindung steht, hin- und herbewegbar sind.

2. Klapplager nach Anspruch 1, dadurch gekennzeichnet, daß die Kolbenstange (5) in einer eine Entlüftungsnut (8) aufweisenden und stirnseitig in der Ausnehmung (12) der Welle (1) befestigten Stützschraube (7) geführt ist.

3. Klapplager nach den Ansprüchen 1 und 2, dadurch gekennzeichnet, daß die Kolbenstange (5) von einer sich im wesentlichen zwischen dem Kolben (4) und der Stützschraube (7) erstreckenden Schraubenfeder (18) umgeben ist.

4. Klapplager nach den Ansprüchen 1 bis 3, dadurch gekennzeichnet, daß die Kolbenstange (5) an ihrem freien Ende konisch verjüngt ist.

5. Klapplager nach Anspruch 1, dadurch gekennzeichnet, daß die Kolbenstange (5) in eine einen Dichtring (19) sowie ein Rückschlagventil (20) enthaltende axiale Bohrung (21) des Wikkeldorns (14) einführbar ist.

6. Klapplager nach einem oder mehreren der vorstehenden Ansprüche, dadurch gekennzeichnet, daß die Welle (1) stirnseitig einen Anschluß (6) für die Einleitung eines flüssigen oder gasförmigen Druckmittels aufweist.

Europäisches
Patentamt

# EUROPÄISCHER RECHERCHENBERICHT

| | EINSCHLÄGIGE DOKUMENTE | | EP 91105325.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl⁵)** |
| A | <u>DE - C1 - 3 822 106</u><br>(L. BOSCHERT M.U.A. GMBH)·<br>* Gesamt * | 1 | B 65 H 18/04 |
| A | <u>DE - C1 - 3 601 912</u><br>(KAMPF GMBH & CO M.F.)<br>* Anspruch 1 * | 1 | |
| D,A | <u>EP - A2 - 0 280 049</u><br>(L. BOSCHERT GMBH & CO. KG.)<br>* Gesamt * | 1 | |
| | | | **RECHERCHIERTE SACHGEBIETE (Int. Cl⁵)** |
| | | | B 65 H 18/00<br>B 65 H 49/00 |

Der vorliegende Recherchenbericht wurde für alle Patentansprüche erstellt.

| Recherchenort | Abschlußdatum der Recherche | Prüfer |
|---|---|---|
| WIEN | 25-06-1991 | JASICEK |